# DEMANDE DE BREVET EUROPEEN

(11) **EP 4 729 283 A1**
(43) Date de publication de la demande: **22.04.2026**
(21) Numéro de dépôt: 25203404.6
(22) Date de dépôt: 19.09.2025
(51) Int. Cl.: B32B 5/02, B32B 5/18, B32B 7/12, B32B 27/12, B32B 27/30, B32B 3/16, E04F 15/10

(54) **EMPIECEMENT DE REVETEMENT DE SOL INTEGRANT UN ELEMENT DE SIGNALETIQUE**

(30) Priorité: 17.10.2024 FR 2411281
(71) Demandeur: GERFLOR, 69009 Lyon 9ème (FR)
(72) Inventeur: BUFFIN, Cyndie, 26130 Saint Paul Trois Châteaux (FR); DUMARD, Thibault, 26130 Saint Paul Trois Châteaux (FR); GOUBET, Fanny, 26130 Saint Paul Trois Châteaux (FR)
(74) Mandataire: Ipsilon

(57) **Abrégé**

L'invention concerne un empiècement de revêtement de sol intégrant un élément de signalétique, l'empiècement (1) comprenant au moins des première et deuxième structures décoratives (3, 4) prédécoupées, assemblées et positionnées côte à côte avec un jeu et collées sur un support (5) pour former l'élément de signalétique, ladite colle (6) étant aussi présente dans le jeu entre les première et deuxième structures décoratives (3, 4).

Selon l'invention :
- les première et deuxième structures décoratives (3, 4) comprennent chacune, du haut vers le sol, une couche décorative (3a, 4a) en PVC plastifié, liée à une première armature de renfort (3b, 4b), liée à une couche inférieure (3c, 4c) en PVC plastifié ;
- le support (5) est souple et enroulable et comprend, une deuxième armature de renfort (5a) liée à une couche d'envers (5b) en PVC plastifié.

## Description

### Domaine technique

La présente invention concerne le domaine des revêtements de sol souples, enroulables et obtenus à partir de PVC, généralement stockés sous forme de rouleau, pour une utilisation dans le domaine du transport ou tout domaine nécessitant la mise en place de signalétique au sol.

Par souple et enroulable, on entend que lors de son stockage ou transport, le dit revêtement peut être présenté en rouleau, enroulé sur lui-même ou autour d'un mandrin de 120 mm de diamètre selon le critère défini dans la norme ISO 24344:2008 méthode A, de préférence sur un mandrin de 40 mm de diamètre, plus préférentiellement sur un mandrin de 20 mm de diamètre, sans que des fissures ou des craquelures ne se forment.

### Art antérieur

Ce type de revêtement de sol souple et enroulable peut présenter un décor :
- dans l'épaisseur de la couche de surface, laquelle présente ainsi une épaisseur élevée, de l'ordre de 0,3 à 2mm, de sorte que le décor puisse résister à un très fort trafic. Le décor peut être d'une couleur unie, par exemple réalisé par calandrage, extrusion, enduction, ou plus généralement obtenu à partir de plusieurs types de granulés de PVC, caoutchouc ou autre polymère, colorés et pressés à chaud pour les lier et former un décor hétérogène ;
- imprimé et protégé par une couche supérieure transparente. Cependant ce type de construction est difficile à mettre en œuvre dans le domaine ferroviaire ou les exigences en termes de résistance au feu sont très élevés.

Ce type de revêtement de sol est réalisé en continu sous forme de lé, puis est enroulé en rouleau. La couche décorative, qu'elle soit imprimée ou non, est ainsi identique sur toute la surface produite.

Chaque campagne de fabrication permet d'obtenir plusieurs centaines de mètres carrés. Par la suite, pour la réalisation d'un plancher de bus ou de train, une partie est prédécoupée en usine au format du véhicule à équiper (on appelle cette partie un « kit »). Même dans le cas d'un décor imprimé il n'est pas possible de prévoir pendant la production à quelle partie du décor va correspondre chaque zone du véhicule.

Il apparait ainsi difficile d'intégrer dans la couche décorative, des logos ou autres éléments de signalisation permettant par exemple d'identifier des zones d'accès pour des personnes à mobilité réduite, des entrées, sorties, etc.

Il existe actuellement sur le marché une technique pour la réalisation de logos.

Selon cette technique, le logo est composé de deux structures décoratives prédécoupées, à savoir une première pour la couleur de fond, et une deuxième pour le logo en tant que tel, qui sont assemblées et collées sur un support laminé du type résine phénolique avec une toile en fibre de verre.

Ce produit est fabriqué en usine, puis livré séparément du revêtement de sol. Le client reçoit ainsi une sorte d'empiècement avec le logo, qu'il doit intégrer lors de l'installation du revêtement de sol. L'empiècement remplace donc une partie du revêtement posé.

Des variantes existent, où le laminé peut avoir une couche de mousse et/ou un adhésif avec un film protecteur pour faciliter sa pose dans le véhicule. Le laminé, en raison de sa rigidité, garantit une bonne durabilité du logo.

Pour réaliser cet empiècement, le laminé est enduit de colle, et les deux surfaces prédécoupées sont assemblées et posées sur le laminé.

L'ensemble est ensuite pressé à chaud, ce qui permet à la colle de remonter entre les deux parties du logo, puis elle réticule pour assurer une étanchéité optimale.

Ce logo est donc pré-soudé et livré à plat sur palette. Cependant, le laminé n'est ni flexible, ni enroulable, ni recyclable. Ces logos rigides doivent être installés par le client, ce qui entraîne une perte de temps et ajoute de la complexité, notamment pour la soudure des bords. De plus, la rigidité du laminé empêche de placer le logo près des bords ou de faire des remontées en plinthe.

Le document EP4311664 décrit une solution de l'art antérieur.

### Exposé de l'invention

L'un des buts de l'invention est donc de proposer un empiècement de revêtement de sol intégrant un élément de signalétique, tel qu'un logo servant par exemple à identifier des zones d'accès pour des personnes à mobilité réduite, des entrées, sorties, etc... qui soit souple et enroulable, pour pouvoir être expédié facilement ou pour s'intégrer sans difficulté dans un revêtement de sol lui aussi souple et enroulable.

Un autre objectif de l'invention est de fournir un revêtement de sol souple et enroulable intégrant un tel empiècement, afin de permettre d'ajouter des logos ou signalétique dans la couche décorative du revêtement de sol, qui soit de préférence recyclable, tout en présentant une bonne étanchéité dans le temps et une bonne résistance au trafic.

A cet effet, il a été mis au point un empiècement de revêtement de sol intégrant un élément de signalétique de type logo ou autre, notamment sous la forme d'un patch ou d'un insert destiné à venir en lieu et place d'une partie du revêtement de sol.

L'empiècement comprend au moins des première et deuxième structures décoratives prédécoupées, par exemple une première pour la couleur de fond, et une deuxième pour le logo en tant que tel, assemblées et positionnées côte à côte avec un jeu, notamment de quelques dixièmes de millimètres, et collées sur un support pour former l'élément de signalétique, ladite colle étant aussi présente dans le jeu entre les première et deuxième structures décoratives, notamment pour coller les chants latéraux desdites structures.

Selon l'invention :
- les première et deuxième structures décoratives comprennent chacune, du haut vers le sol, une couche décorative en PVC, éventuellement vernie, liée à une première armature de renfort, liée à une couche inférieure en PVC plastifié ;
- le support est souple et enroulable et comprend, une deuxième armature de renfort liée à une couche d'envers en PVC plastifié.

De cette manière, le support du logo est renforcé tout en restant enroulable, et est réalisé à partir de PVC ce qui facilite son recyclage. Les deux structures décoratives réalisant le logo sont prédécoupées en conservant un interstice entre chaque surface pour permettre la remontée de colle le long de leurs bords, ce qui favorise son étanchéité, mais aussi sa résistance au trafic.

L'invention permet donc d'intégrer cet empiècement, et donc des éléments de signalétique de manière harmonieuse, durable et étanche au sein des revêtements de sol souples, tout en restant compatible avec les processus industriels actuels de pose de revêtements de sol.

L'invention permet également d'expédier l'empiècement enroulé, seul ou conjointement à un rouleau de revêtement de sol dans lequel l'empiècement sera intégré sur chantier, sans difficulté et sans utilisation de palette.

Etant donné la souplesse de l'empiècement, il est aussi possible de réaliser aisément des remontées en plinthe avec le revêtement souple qui l'intègre.

Par ailleurs, la combinaison des armatures de renfort dans les structures décoratives et dans le support permet d'améliorer la résistance au trafic de l'ensemble tout en conservant un revêtement facile à poser.

Selon une première forme de réalisation, la couche décorative des première et/ou deuxième structures décoratives comprend une couche d'usure transparente en PVC et un décor imprimé :
- sous la couche d'usure, ou ;
- sur la première armature de renfort, ou ;
- sur un film positionné entre la couche d'usure et la première armature de renfort, lequel film fait partie de la couche décorative.

Cet agencement offre une grande flexibilité dans la personnalisation et la conception des éléments de signalétique, tout en garantissant une bonne résistance à l'usure et à la déformation.

Cette variante permet de proposer un décor imprimé visible au travers d'une couche d'usure, par exemple pour augmenter le contraste du décor par rapport à l'ensemble de la pose.

Selon une autre forme de réalisation, la couche décorative des première et/ou deuxième structures décoratives comprend une couche d'usure en PVC avec un décor dans l'épaisseur de la couche d'usure.

Afin d'augmenter la résistance au trafic, les première et deuxième structures décoratives comprennent chacune une troisième armature de renfort, de préférence en polyester non-tissé, collée à une face inférieure de la couche inférieure. La troisième armature de renfort peut également se présenter sous la forme d'un non-tissé, d'une grille, d'un complexe comprenant un non-tissé et une grille ou encore d'une armature tissée. Cette troisième armature se lie efficacement au support et apporte un meilleur confort à la marche.

Selon une forme de réalisation particulière, l'empiècement comprend une sous couche liée à une face inférieure du support, qui comprend, du haut vers le sol, une quatrième armature de renfort et une mousse d'envers.

Ce système de sous-couche améliore les performances acoustiques et thermiques du revêtement tout en augmentant le confort de marche. La mousse d'envers sert également de couche amortissante, réduisant les contraintes mécaniques subies par le revêtement.

Cette mousse d'envers, par exemple obtenue par extrusion ou enduction, est en PVC plastifié, et présente une épaisseur comprise entre 3 et 5mm et une densité comprise entre 0,25 et 0,5. Ceci permet d'assurer un équilibre optimal entre confort et résistance au trafic.

De préférence, l'empiècement présente une épaisseur totale comprise entre 2 et 3,5 mm, préférentiellement entre 2,2 et 2,8 mm.

Cette épaisseur garantit une bonne résistance au trafic et aux charges tout en maintenant une flexibilité suffisante pour un enroulement facile, facilitant ainsi l'installation et le transport.

Les première et deuxième structures décoratives sont collées entre elles et avec le support avec une colle thermofusible, une colle base MS Polymère, une colle base polyuréthane, une colle base acrylique ou un film thermofusible, mais une tenue accrue a été identifiée avec une colle bi-composante à base époxy-uréthane. Entre 250 et 750g/m² de colle, préférentiellement de 350 g/m² à 600g/m², sont généralement déposés sur le support PVC plastifié et renforcé avant pressage à chaud pour garantir une bonne tenue mécanique. La colle bi-composante à base époxy-uréthane assure une adhérence durable et une résistance mécanique élevée, tout en offrant une bonne flexibilité pour éviter les fissures dues aux mouvements du sol ou aux variations de température. De plus, contrairement à un mastic, ce type de colle durcit suffisamment pour être broyé efficacement lors d'opérations de recyclage. Ceci permet une meilleure réutilisation d'un empiècement selon l'invention en fin de vie, broyé, pour une intégration dans de nouveaux revêtements de sol souples en PVC comprenant des produits recyclés.

Avantageusement et afin de simplifier le processus d'installation, l'empiècement comprend une face inférieure adhésivée et revêtue d'un film pelable.

L'invention concerne également un revêtement de sol souple et enroulable intégrant un empiècement tel que précité. L'empiècement peut être collé ou soudé au revêtement, en lieu et place d'une partie dudit revêtement, directement sur le chantier. Ou bien, d'une manière avantageuse, l'empiècement est déjà pré-positionné et intégré, c'est-à-dire collé ou soudé au revêtement, lequel est ensuite enroulé et commercialisé.

Cela facilite la pose sur site car l'empiècement se retrouve au bon endroit sur le rouleau, son intégration est homogène.

L'invention concerne enfin un procédé de fabrication d'un empiècement de revêtement de sol remarquable en ce qu'il comprend les étapes suivantes :
- découpe d'un premier motif dans une première structure décorative, et d'un second motif complémentaire dans une deuxième structure décorative, réalisées en PVC plastifié et renforcé ;
- enduction d'une couche de colle sur un support souple et enroulable en PVC plastifié et renforcé ;
- assemblage des première et deuxième structures décoratives sur la couche de colle pour former l'élément de signalétique, avec un jeu entre elles, notamment de quelques dixièmes de millimètres, pour permettre une remontée de colle dans ledit jeu ;
- optionnellement, dépose d'une plaque structurée au regard de l'élément de signalétique ;
- pressage à chaud afin de réticuler la colle et lier l'ensemble.

Le pressage à chaud pour réticuler la colle garantit un assemblage solide et durable, optimisant ainsi la résistance mécanique et l'étanchéité de l'empiècement. De façon préférentielle, le procédé comprend une étape avant l'étape de pressage à chaud qui consiste à déposer une plaque structurée au regard de la face visible des première et deuxième structures décoratives. Cette plaque permet notamment de maintenir voire créer un relief en surface des structures décoratives, notamment pour améliorer les performances de glissance et diminuer le risque de chute. La plaque structurée peut être métallique, en caoutchouc, en silicone ou équivalent. La profondeur du relief créé est généralement comprise entre 0,05 et 0,5 mm.

### Brève description des dessins

D'autres caractéristiques et avantages de l'invention ressortiront clairement de la description qui en est réalisée ci-après, à titre indicatif et nullement limitatif, en référence aux figures annexées dans lesquelles :
[Fig.1] est une représentation schématique, vue de dessus, d'un revêtement de sol intégrant un empiècement selon l'invention.
[Fig.2] est une vue similaire à celle de la figure 1, vue en coupe transversale
[Fig.3] est une vue éclatée des différentes couches d'une première forme de réalisation de l'empiècement de revêtement de sol selon l'invention.
[Fig.4] est une vue éclatée des différentes couches d'une deuxième forme de réalisation de l'empiècement de revêtement de sol selon l'invention, n'illustrant que l'une des structures décoratives.
[Fig.5] est une vue éclatée des différentes couches d'une troisième forme de réalisation de l'empiècement de revêtement de sol selon l'invention, n'illustrant que l'une des structures décoratives
[Fig.6] est une vue éclatée des différentes couches d'une quatrième forme de réalisation de l'empiècement de revêtement de sol selon l'invention, n'illustrant que l'une des structures décoratives.
[Fig.7] est une vue éclatée des différentes couches d'une cinquième forme de réalisation de l'empiècement de revêtement de sol selon l'invention dont le support est modifié.

### Description détaillée de l'invention

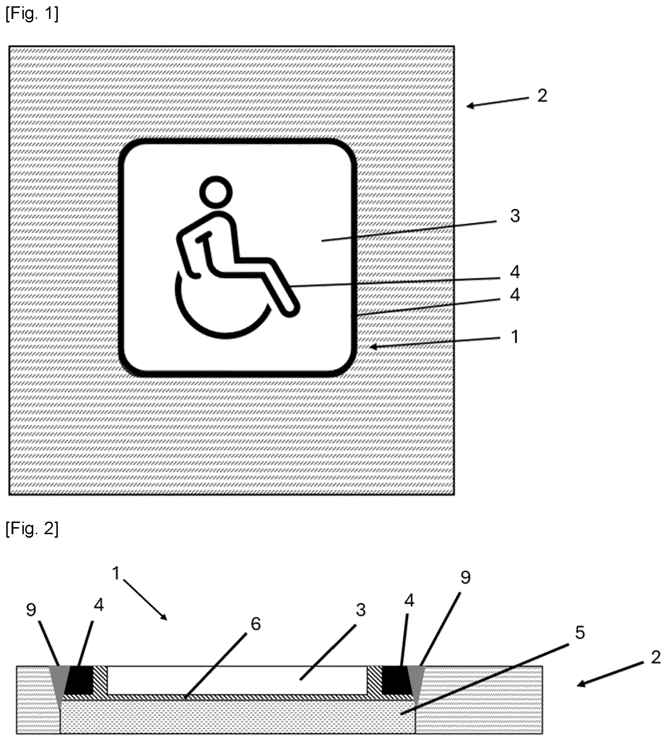

En référence aux figures 1 à 7, l'invention concerne un empiècement (1) de revêtement de sol souple et enroulable comprenant un élément de signalétique, tel qu'un logo ou tout autre type de marquage.

L'empiècement (1) est donc destiné à venir remplacer une zone découpée d'un revêtement de sol (2), et s'intégrer audit revêtement de sol (2).

L'empiècement (1) comprend des première et deuxième structures décoratives (3, 4) prédécoupées, assemblées et positionnées côte à côte et collées sur un support (5) pour former l'élément de signalétique.

En fonction de la signalétique à réaliser, les structures décoratives (3, 4) peuvent présenter toutes formes, décor ou couleur, par exemple une première structure décorative (3) est utilisée pour la couleur de fond, et une deuxième structure décorative (4) pour le logo en tant que tel. Bien entendu, plus de deux structures peuvent être utilisées selon la complexité du logo à réaliser.

Les structures décoratives (3, 4) sont positionnées côte à côte avec un jeu, par exemple de quelques dixièmes de millimètres, pour que la colle (6) utilisée pour les coller sur le support (5) puisse remonter dans le jeu et lier les structures (3, 4) entre elles.

La colle (6) utilisée est de préférence une colle bi-composante à base époxy-uréthane, capable de supporter (5) les contraintes mécaniques et thermiques, notamment lors du pressage à chaud qui permet de lier l'ensemble. Entre 250 et 750g/m², préférentiellement de 350 g/m² à 600g/m², sont généralement déposés sur le support PVC (5) plastifié et renforcé avant pressage à chaud pour garantir une bonne tenue mécanique. En plus d'être utilisée pour l'adhésion des couches décoratives au support (5), cette colle (6) remplit également les interstices entre les motifs, renforçant ainsi l'étanchéité de l'empiècement (1).

Chaque structure décorative (3, 4) comprend, du haut vers le bas, les différentes couches suivantes :
- une couche décorative (3a, 4a) en PVC plastifié, éventuellement revêtue d'une couche de vernis (V) pour améliorer sa résistance et protéger sa surface. Le vernis (V) peut être acrylique ou polyuréthane et inclure des particules antidérapantes, comme du corindon ou des particules de polyamide ;
- une première armature de renfort (3b, 4b), réalisée en fibres de verre, en cellulose et/ou en polyester, sous une forme non-tissée, d'une grille, d'un complexe ou d'une armature tissée, préférentiellement tissée selon une armure toile sans que cela ne soit limitatif, et qui renforce la solidité de la structure ;
- une couche inférieure (3c, 4c) en PVC plastifié, servant de liaison avec le support (5) en PVC plastifié et renforcé. Cette couche inférieure peut contenir des charges minérales et être renforcée par des agents ignifugeants, ce qui la rend adaptée à des environnements à haute exigence de sécurité, tels que les véhicules ferroviaires.

La couche décorative (3a, 4a) peut être obtenue par calandrage, extrusion, pressage ou enduction. Elle est en PVC plastifié, avec ou sans charge minérale. Elle peut être teintée ou transparente. Elle peut comprendre des particules antidérapantes (corindon, particules de polyamide ou équivalent). Son poids est généralement compris entre 300 et 2500 g/m².

La couche inférieure (3c, 4c) peut être obtenue par calandrage, extrusion, pressage ou enduction. Elle est en PVC plastifié, avec ou sans charge minérale. Elle est généralement teintée. Elle peut comprendre du PVC recyclé. Son poids est généralement compris entre 300 et 2500 g/m².

Ces structures décoratives (3, 4) sont donc résistantes, souples et enroulables.

Le support (5) des structures décoratives (3, 4) est aussi conçu pour être résistant, souple et enroulable, facilitant ainsi l'intégration de l'empiècement (1) dans un revêtement présenté en rouleau.

Le support (5) comprend, du haut vers le bas ou du bas vers le haut :
- une deuxième armature de renfort (5a), similaire à celle des couches décoratives, pour garantir la solidité et la stabilité de l'empiècement (1) sur le sol ;
- une couche d'envers (5b) en PVC plastifié, qui peut comprendre du PVC recyclé pour des raisons écologiques, et qui offre une bonne résistance mécanique tout en maintenant la flexibilité du produit. La couche d'envers (5b) peut être obtenue par calandrage, extrusion, pressage ou enduction, préférentiellement par calandrage. Elle est en PVC plastifié avec des charges minérales. Elle comprend généralement entre 1 et 50 PCR de plastifiant, préférentiellement entre 5 et 30 PCR de plastifiant et entre 1 et 200 PCR, préférentiellement entre 5 et 50 PCR de charges minérales. La couche d'envers comprend généralement une épaisseur comprise entre 80 et 800 µm, préférentiellement entre 100 et 300µm.

A partir de ce concept, plusieurs variantes de réalisation des couches décoratives peuvent être envisagées.

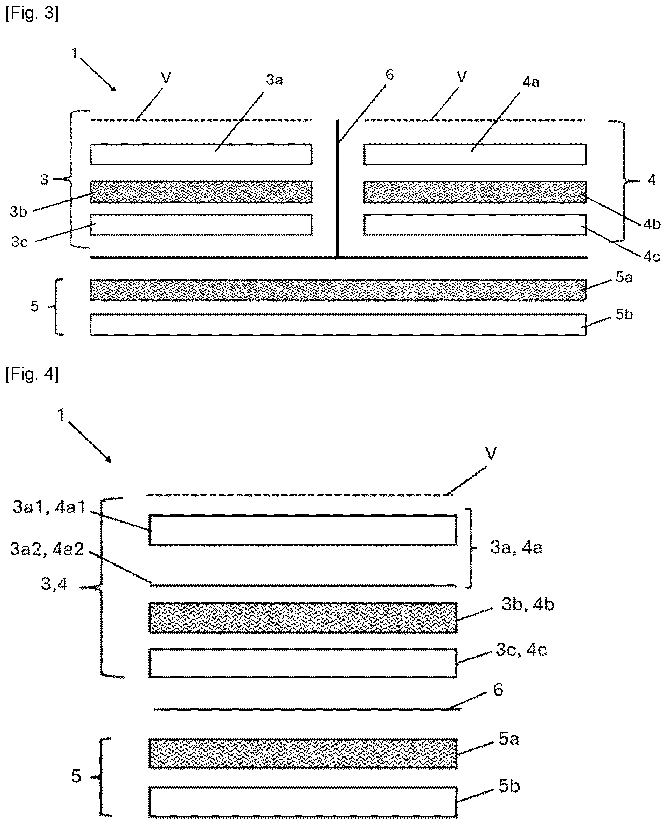

Selon une première forme de réalisation illustré à la figure 3, la couche décorative (3a, 4a) peut comprendre une couche d'usure en PVC plastifié avec un décor dans son épaisseur, par exemple noyé dans la masse. Le décor peut être d'une couleur unie, par exemple réalisé par calandrage, extrusion, enduction, ou plus généralement obtenu à partir de plusieurs types de granulés de PVC, caoutchouc ou autre polymère, colorés et pressés à chaud pour les lier et former un décor hétérogène.

Selon une deuxième forme de réalisation illustré à la figure 4, la couche décorative (3a, 4a) comprend une couche d'usure transparente en PVC plastifié (3a1, 4a1) et un décor imprimé (3a2, 4a2). Le décor peut être directement imprimé sous la couche d'usure, sur la première armature de renfort (3b, 4b), ou sur un film positionné entre la couche d'usure et la première armature de renfort (3b, 4b).

Bien entendu, en fonction du décor et du logo à réaliser, ces deux formes de réalisation peuvent être combinées, c'est-à-dire que l'une peut être utilisée pour la première structure décorative (3), et l'autre pour la deuxième.

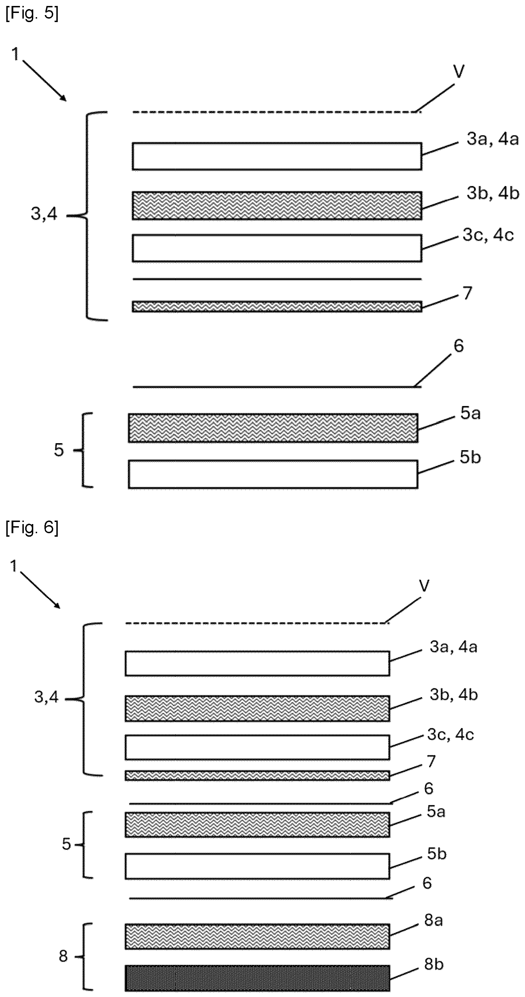

En référence à la figure 5, les première et deuxième structures décoratives (3, 4) comprennent chacune une troisième armature de renfort (7) collée à une face inférieure de la couche inférieure (3c, 4c), afin d'améliorer sa résistance au trafic.

La troisième armature de renfort (7) est collée à la face inférieure de la couche inférieure (3c, 4c) par une couche de colle (6), qui peut être une colle thermofusible ou un film thermofusible.

Selon une forme de réalisation particulière illustrée à la figure 6, et pour améliorer le confort et l'amortissement, une sous-couche (8) en mousse de PVC plastifié et renforcée peut être liée à une face inférieure de la couche d'envers (5b) en PVC plastifié du support (5). Alternativement, le sous-couche (8) en mousse de PVC plastifié et renforcée peut être liée à une face inférieure de la deuxième armature de renfort (5a) du support (5), non représenté. Cette sous-couche (8) comprend une quatrième armature de renfort (8a) et une mousse d'envers en PVC plastifié (8b). La mousse d'envers (8b) présente une épaisseur comprise entre 3 et 5 mm et une densité entre 0,25 et 0,5, et permet une meilleure absorption des chocs et une isolation phonique.

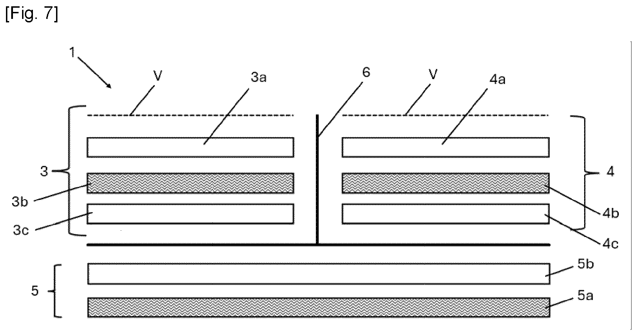

Selon une forme de réalisation particulière illustrée à la figure 7, le support (5) comprend du haut vers le bas :
- une couche d'envers (5b) en PVC plastifié, qui peut comprendre du PVC recyclé pour des raisons écologiques, et qui offre une bonne résistance mécanique tout en maintenant la flexibilité du produit ;
- une deuxième armature de renfort (5a), similaire à celle des couches décoratives, pour garantir la solidité et la stabilité de l'empiècement (1) sur le sol.

Les différentes armatures de renfort décrites peuvent être :
- des voiles de fibres de verre, de cellulose et/ou de polyester, par exemple d'un poids compris entre 50 et 120g/m² ;
- des grilles de fibres de verre, par exemple d'un poids compris entre 40-100g/m² d'une maille 5mm X 3mm ou plus serrées ;
- des complexes comprenant un voile et une grille, par exemple d'un poids compris entre 40-100g/m² ;
- des armatures tissées, préférentiellement tissées selon une armure toile, sans que cela ne soit limitatif. Il pourrait tout à fait être envisagé une armure tissée en sergé ou satin. L'armature tissée est de préférence réalisée à partir de fibres de verre, de fibres de polyamide ou de fibres de polyester. Les fibres de verre peuvent présenter un titrage compris entre 22 Tex et 68 Tex. Les fibres de polyester peuvent présenter un titrage de l'ordre de 1100 décitex. Les fibres de polyamide peuvent présenter un titrage compris entre 44 décitex et 78 décitex. L'armature tissée présente généralement une épaisseur comprise entre 140 µm et 350 µm, préférentiellement entre 150 µm et 250 µm. L'armature tissée présente généralement une masse surfacique comprise entre 150 et 300 g/m², bien que cette valeur dépende de la nature des fibres utilisées. Lorsque l'armature tissée est réalisée à partir de fibre de verre, elle peut présenter un nombre de fils de chaîne compris entre 15 et 18 fils par cm et un nombre de fils de trame compris entre 12 et 15 fils par cm.

De préférence l'armature, sous forme de grille, non tissée ou tissée est imprégnée d'un polymère thermoplastique ou thermodurcissable dans une quantité comprise entre 1 % et 10 % en poids de l'armature tissé imprégnée pour ne pas dégrader la recyclabilité, obtenir une plus grande rigidité et limiter voire supprimer le traversage de colle susceptible d'encrasser la ligne de lamination au cours du procédé d'assemblage des couches. Le polymère thermodurcissable ou thermoplastique peut être choisi dans le groupe comprenant la résine polyuréthane, la résine polyester, la résine phénolique, la résine époxy, le polysulfone, la résine vinylester, la résine époxy-acrylique, et leurs mélanges.

La première armature de renfort (3b, 4b) peut être enduite d'une couche de plastisol gélifiée pour servir de support d'impression à la couche de décor imprimée.

Toutes les couches en PVC peuvent comprendre des agents ignifugeants.

Le procédé de fabrication de cet empiècement (1) de revêtement de sol (2) suit les étapes suivantes :
- des motifs décoratifs sont découpés dans les différentes structures décoratives (3, 4), qui peuvent être de compositions, couleurs ou motifs différents ;
- la colle (6) bi-composante est appliquée sur le support (5) en PVC plastifié et renforcé ;
- les motifs prédécoupés sont ensuite assemblés côte à côte sur le support (5), en laissant un léger interstice entre les motifs ;
- un pressage à chaud est effectué pour réticuler la colle (6) et lier solidement les différentes couches entre elles.

L'empiècement (1) décoratif ainsi créé peut être livré tel quel et installé directement sur le chantier, ou bien pré-intégré dans un revêtement de sol (2) souple et enroulable. A cet effet, le revêtement de sol (2) est découpé pour réaliser une fenêtre de dimensions équivalentes à celles de l'empiècement (1) et à l'endroit où l'empiècement (1) doit être intégré. L'empiècement (1) est alors collé ou soudé, de préférence avec un cordon de soudure (9) pour lier mécaniquement le revêtement de sol (2) et l'empiècement (1). Cela garantit une étanchéité parfaite, essentielle dans des environnements soumis à des sollicitations importantes, comme les zones de trafic élevé dans les transports en commun ou les bâtiments publics.

L'épaisseur totale de l'empiècement (1) est généralement comprise entre 2 et 3,5 mm, préférentiellement entre 2,2 et 2,8 mm, pour garantir une faible épaisseur sans compromettre la résistance au trafic.

L'empiècement (1) présente généralement un poids compris entre 2800 g/m² et 5000 g/m². L'empiècement (1) présente un poids limité afin de ne pas augmenter la consommation de carburant, notamment dans le cas de son utilisation dans des véhicules comme les trains ou les bus.

Les motifs peuvent être assortis ou non au décor global du revêtement. Ils peuvent être personnalisés selon les besoins du client ou de l'application, par exemple, des logos spécifiques, des motifs contrastés, etc.

L'invention propose un empiècement (1) de revêtement de sol (2) souple et enroulable, robuste et résistant, conçu pour intégrer des éléments de signalétique tels que des logos. Grâce à sa structure multicouche renforcée et son procédé d'assemblage, cet empiècement (1) peut être facilement intégré dans un revêtement de sol (2), tout en offrant une durabilité et une performance élevées face aux contraintes de trafic intensif et aux exigences de sécurité, notamment en termes d'étanchéité et de résistance au feu.

## Revendications

1. Empiècement (1) de revêtement de sol intégrant un élément de signalétique, l'empiècement (1) comprenant au moins des première et deuxième structures décoratives (3, 4) prédécoupées, assemblées et positionnées côte à côte avec un jeu et collées sur un support (5) pour former l'élément de signalétique, ladite colle (6) étant aussi présente dans le jeu entre les première et deuxième structures décoratives (3, 4) ***caractérisée en* ce *que :***
- les première et deuxième structures décoratives (3, 4) comprennent chacune, du haut vers le sol, une couche décorative (3a, 4a) en PVC plastifié, liée à une première armature de renfort (3b, 4b), liée à une couche inférieure (3c, 4c) en PVC plastifié ;
- le support (5) est souple et enroulable et comprend, une deuxième armature de renfort (5a) liée à une couche d'envers (5b) en PVC plastifié.

2. Empiècement (1) de revêtement de sol selon la revendication 1, ***caractérisé* en ce que** la couche décorative (3a, 4a) des première et/ou deuxième structures décoratives (3, 4) comprend une couche d'usure transparente (3a1, 4a1) en PVC plastifié et un décor imprimé (3a2, 4a2) :
- sous la couche d'usure (3a1, 4a1), ou ;
- sur la première armature de renfort (3b, 4b), ou ;
- sur un film positionné entre la couche d'usure (3a1, 4a1) et la première armature de renfort (3b, 4b).

3. Empiècement (1) de revêtement de sol selon la revendication 1, ***caractérisé* en ce que** la couche décorative (3a, 4a) des première et/ou deuxième structures décoratives (3, 4) comprend une couche d'usure en PVC plastifié avec un décor dans l'épaisseur de la couche d'usure.

4. Empiècement (1) de revêtement de sol selon l'une des revendications précédentes, ***caractérisé* en ce que** les première et deuxième structures décoratives (3, 4) comprennent chacune une troisième armature de renfort (7) collée à une face inférieure de la couche inférieure (3c, 4c).

5. Empiècement (1) de revêtement de sol selon l'une des revendications précédentes, ***caractérisé* en ce qu'**il comprend une sous couche (8) liée à une face inférieure du support (5), qui comprend, du haut vers le sol, une quatrième armature de renfort (8a) et une mousse d'envers (8b).

6. Empiècement (1) de revêtement de sol selon la revendication 5, ***caractérisé* en ce que** la mousse d'envers (8b) est en PVC plastifié, présente une épaisseur comprise entre 3 et 5mm et une densité comprise entre 0,25 et 0,5.

7. Empiècement (1) de revêtement de sol selon l'une des revendications précédentes, ***caractérisé* en ce qu'**il présente une épaisseur totale comprise entre 2 et 3,5 mm, préférentiellement entre 2,2 et 2,8 mm.

8. Empiècement (1) de revêtement de sol selon l'une des revendications précédentes, ***caractérisé* en ce que** les première et deuxième structures décoratives (3, 4) sont collées entre elles et avec le support (5) avec une colle bi-composante à base époxy-uréthane.

9. Empiècement (1) de revêtement de sol selon l'une des revendications précédentes, ***caractérisé* en ce qu'**il comprend une face inférieure adhésivée et revêtue d'un film pelable.

10. Revêtement de sol (2) souple et enroulable intégrant un empiècement (1) de revêtement de sol (2) selon l'une des revendications précédentes.

11. Procédé de fabrication d'un empiècement (1) de revêtement de sol (2) selon l'une des revendications 1 à 9, ***caractérisé* en ce qu'**il comprend les étapes suivantes :
- découpe d'un premier motif dans une première structure décorative (3), et d'un second motif complémentaire dans une deuxième structure décorative (4), réalisées en PVC plastifié et renforcé ;
- enduction d'une couche de colle (6) sur un support (5) souple et enroulable en PVC plastifié et renforcé ;
- assemblage des première et deuxième structures décoratives (3, 4) sur la couche de colle (6) pour former l'élément de signalétique, avec un jeu entre elles pour permettre une remontée de colle (6) dans ledit jeu ;
- optionnellement, dépose d'une plaque structurée au regard de l'élément de signalétique ;
- pressage à chaud afin de réticuler la colle (6) et lier l'ensemble.
